# EUROPÄISCHE PATENTSCHRIFT

(11) **EP 2 026 314 B1**
(45) Veröffentlichungstag und Bekanntmachung des Hinweises auf die Patenterteilung: **09.09.2020**
(21) Anmeldenummer: 08161184.0
(22) Anmeldetag: 25.07.2008
(51) Int. Cl.: G09B 21/00

(54) **Haptikstreifen und daraus hergestelltes taktiles Orientierungs- und Koordinatensystem**
Haptic strip and tactile orienting and coordinating system made from same
Bande haptique et système d'orientation et de coordination tactile ainsi fabriqué

(30) Priorität: 26.07.2007 DE 102007035522
(43) Veröffentlichungstag der Anmeldung: 18.02.2009
(73) Patentinhaber: Hoffmann, Frank, 45479 Mülheim a.d. Ruhr (DE)
(72) Erfinder: Hoffmann, Frank, 45479 Mülheim a.d. Ruhr (DE)
(74) Vertreter: Viering, Jentschura & Partner mbB Patent- und Rechtsanwälte

(56) Entgegenhaltungen:
- EP-A1- 0 994 453
- DE-A1- 4 306 196
- GB-A- 2 147 726
- GB-A- 2 263 354
- US-A- 5 245 744
- US-A1- 2007 166 693

## Beschreibung

Die Erfindung richtet sich auf die Verwendung mehrerer Klebe-und Haptikstreifen zur Ausbildung eines Hilfsmittels für Blinde zur Ermöglichung der zeilenmäßigen Abtastung von die Brüste eines weiblichen menschlichen Körpers umfassenden Hautbereichen bei der Durchführung einer klinischen Brustuntersuchung.

Um Blinden zu ermöglichen, Flächen- oder Substratbereiche gezielt und orientiert abzutasten sowie Positionen innerhalb des abgetasteten Flächenbereiches identifizierbar bezeichnen und benennen zu können, ist es notwendig, ein ertastbares, also taktil wahrnehmbares Orientierungs- und/oder Koordinatensystem zur Verfügung zu stellen.

Aus der DE 43 06 196 A1 sind ein Lehrspielzeug für Blinde sowie Puppenkleider oder Schürzen zum Anbringen an Puppen bekannt, um diese als Teile für Lehrspielzeuge verwenden zu können. Hierbei werden Platten oder Folien, die mit Erhebungen versehen sind, wobei die Erhebungen einen gewissen Informationsgehalt wiedergeben, an einer Puppe, einem Stofftier, an Spielbausteinen oder anderem Spielzeug lösbar befestigt. Die Platten oder Folien bilden Haptikstreifen mit einer Oberfläche aus einem Muster in einer Reihe aneinandergereihter Felder aus, wobei jeweils aneinander angrenzende Felder eine mit den Fingern taktil wahrnehmbare, unterschiedliche Oberflächenhaptik oder Oberflächenstruktur aufweisen und sich das Muster aus mehr als drei unterschiedlichen Feldtypen zusammensetzt.

Ein computerimplementiertes Verfahren, um Informationen einer digitalen Musikdatei auf eine Vorrichtung zu übertragen, welche eine ertastbare Ausgabe der Informationen erschafft, offenbart die US 2007/0166693 A1. Damit soll blinden Musikern ermöglicht werden, die musikalischen Informationen gleichzeitig zu lesen und auf einem Instrument zu spielen. Hierbei spielt eine taktile Vorrichtung eine Rolle, die auf der Haut eines menschlichen Körpers aufgebracht wird.

Die US 5 245 744 A offenbart eine Vorrichtung und ein Verfahren zur Anbringung von Blindenschrift auf Hinweisschildern in Gebäuden, wobei die Buchstaben in ein Schild gebohrt und anschließend Kugeln in den Löchern festgeklemmt oder in diese geklebt werden, um die den Buchstaben entsprechenden Erhebungen zu formen. Somit entsteht ein taktil wahrnehmbares Muster aus Kugeln, deren Anordnung den Regeln der Blindenschrift unterliegt.

Aus der EP 0 994 453 A1 ist eine Anzeigevorrichtung bekannt, welche eine einfache Identifizierung von Orten, Büros, Richtungen oder dergleichen ermöglicht, indem ein Trägerelement mit einer Vielzahl von Löchern versehen wird, in welche hervorstehende Stifte eingesetzt werden, die dann ein taktil ertastbares System darstellen. Das hierbei erzeugte taktile Muster bildet Wörter oder Buchstabenkombinationen in Blindenschrift aus, welche dann von blinden Menschen ertastet und als Informationsgeber genutzt werden können.

Ein taktil wahrnehmbares Fluchtweganzeigesystem, das innerhalb von Gebäuden, zum Beispiel im Brandfall bei starker Rauchbildung, anwendbar ist, wenn die üblichen visuellen Informationssysteme nicht mehr erkennbar sind, offenbart die GB 2 147 726 A. Das Fluchtweganzeigesystem wird von einer Leiste gebildet, welche an den Wänden und Notausgängen eines Gebäudes befestigt werden kann und aufgrund taktil wahrnehmbarer Erhebungen den Weg zu den Notausgängen anzeigt. Aus der GB 2 263 354 A ist ein von blinden Menschen ertastbares Hinweisschild bekannt, welches auf einer Anzeigefläche eine begrenzende Erhebung aufweist, innerhalb welcher mit den Fingern taktil wahrnehmbare Muster, die mittels Buchstaben in Blindenschrift und/oder mittels taktil wahrnehmbaren Symbolen ausgebildet werden, angeordnet werden können.

Da Blinde über ein ausgezeichnetes Tastvermögen verfügen, bietet es sich an, zur Orientierung eine Fläche mit haptisch unterschiedlichen, d.h. sich unterschiedlich anfühlenden, Feldern oder Flächenbereichen auszubilden und die jeweils ertastete Position innerhalb des Flächenbereiches durch Benennung des jeweils ertasteten Feldes zu identifizieren. Um dies zu erreichen, will die Erfindung eine Möglichkeit bereitstellen.

Der Erfindung liegt daher die Aufgabe zugrunde, eine Lösung zu schaffen, die es ermöglicht, Flächenbereiche mit einem für Blinde ertastbaren taktilen Orientierungs- und Koordinatensystem zu versehen.

Die vorstehende Aufgabe wird erfindungsgemäß gelöst durch eine Verwendung mehrerer Klebe- und Haptikstreifen gemäß Anspruch 1.

Weiterbildungen und Ausgestaltungen der Erfindung ergeben sich aus den Unteransprüchen 2 - 6.

Die vorstehende Aufgabe wird gelöst durch eine Verwendung mehrerer Klebe- und Haptikstreifen zur Ausbildung eines Hilfsmittels für Blinde zur Ermöglichung der zeilenmäßigen Abtastung von die Brüste eines weiblichen menschlichen Körpers umfassenden Hautbereichen bei Durchführung einer klinischen Brustuntersuchung, wobei fünf Klebe- und Hauptstreifen,
die jeweils eine Oberfläche aufweisen, die aus einer Reihe aneinandergereihter Felder besteht, wobei die Felder ein mehrfach wiederkehrendes, gleichmäßiges Muster ausbildend angeordnet sind, das sich aus mindestens drei taktil unterschiedlich wahrnehmbaren Feldtypen zusammensetzt, wobei jeweils aneinander angrenzende Felder eine mit den Fingern taktil wahrnehmbare, unterschiedliche Oberflächenhaptik oder Oberflächenstruktur aufweisen und wobei die den Feldern gegenüberliegende, rückseitige Oberflächenseite der Klebe-und Haptikstreifen mit einem hautverträglichen Klebstoff versehen ist,
jeweils mit Abstand zueinander und senkrecht sowie parallel zueinander auf die Brüste eines weiblichen menschlichen Körpers umfassende Hautbereiche und jeweils mit einer solchen Länge, dass sie jeweils länger als der Durchmesser der zu untersuchenden weiblichen Brüste sind, aufgeklebt werden, wobei die fünf Klebe- und Haptikstreifen längs verlaufend zumindest im Wesentlichen parallel zur Längsachse des weiblichen Körpers auf diesem aufgebracht und taktil gleichartig wahrnehmbare Felder jeweils auf einer zumindest im Wesentlichen waagerecht verlaufenden Linie gleicher Höhe liegend einander koordiniert zeilenmäßig zugeordnet und zueinander ausgerichtet angeordnet und aufgeklebt werden, wobei ein erster Klebe- und Haptikstreifen die Mamille der rechten Brust überstreicht und ein zweiter Klebe- und Haptikstreifen die Mamille der linken Brust überstreicht, wobei der erste und der zweite Haptik- und Klebestreifen jeweils direkt über die jeweilige Brustmitte gelegt und geklebt werden, wobei ein dritter Klebe- und Haptikstreifen zwischen den beiden Brüsten längs der Sternummitte verlaufend angeordnet wird, ein vierter Klebe- und Haptikstreifen lateral rechts in Höhe der mittleren Axillarfalte und ein fünfter Klebe- und Haptikstreifen lateral links in Höhe der mittleren Axillarfalte angeordnet wird, und wobei jeweils ein Feld eines ersten Feldtyps von erstem und zweitem Klebe- und Haptikstreifen auf zumindest im Wesentlichen gleicher Höhe auf dem Zentrum der jeweiligen Mamille angeordnet wird und jeweils ein Feld des ersten Feldtyps von drittem bis fünftem Klebe- und Haptikstreifen zumindest im Wesentlichen auf derselben Höhe angeordnet wird.

Durch Bereitstellung eines Haptikstreifens mit aneinander angrenzenden Feldern unterschiedlicher Oberflächenstruktur oder Oberflächenhaptik oder auch aneinander angrenzenden Feldern mit beispielsweise in Blindenschrift unterschiedlich geprägter Oberflächenstruktur, lässt sich nach Art einer Werte- und/oder Zahlenreihe oder eines erfühlbaren Musters ein Streifen mit gleichmäßigem Muster, d.h. einer regelmäßigen Abfolge einzelner, unterschiedlicher Felder, aufbauen, wobei die einzelnen Felder durch Ertasten taktil wahrnehmbar sind. Werden fünf Haptikstreifen parallel und mit Abstand zueinander mit jeweils gleichen oder identischen Feldern zueinander ausgerichtet zugeordnet angeordnet, so wird dadurch eine zwischen den Haptikstreifen jeweils imaginär ausgebildete Zeilenstruktur geschaffen, die zwischen den mit Abstand angeordneten Haptikstreifen das zeilenmäßige Ertasten der zwischen den Haptikstreifen befindlichen Oberflächenstruktur oder Oberfläche ermöglicht. Hierdurch lässt sich ein Orientierungssystem mit Hilfe von fünf Haptikstreifen ausbilden. Wenn nun ein Feld der Haptikstreifen jeweils als Nullpunkt identifizierbar ist, so lässt sich die diese Felder beinhaltende, auf einer Linie liegende (imaginäre) Zeile als Nulllinie auffassen, so dass damit auch gleichzeitig ein Koordinatensystem geschaffen wird.

Die Ausbildung des Hilfsmittels zur Ausbildung und Abgrenzung eines taktilen Orientierungs- und Koordinatensystems umfasst erfindungsgemäß fünf, jeweils mit Abstand zueinander und senkrecht sowie parallel zueinander angeordnete Haptikstreifen mit einer Oberfläche aus in einem, vorzugsweise mehrfach wiederkehrenden, insbesondere gleichmäßigen, Muster aus in einer Reihe aneinandergereihten Feldern. Jeweils aneinander angrenzende Felder eines jeden Klebe- und Haptikstreifens weisen eine mit den Fingern taktil wahrnehmbare, unterschiedliche Oberflächenhaptik oder Oberflächenstruktur auf. Das Muster setzt sich aus mindestens drei unterschiedlichen Feldtypen zusammen, wobei gleichartige Felder der jeweiligen Haptikstreifen jeweils auf einer zumindest im Wesentlichen waagerecht verlaufenden Linie gleicher Höhe liegend einander koordiniert zeilenmäßig zugeordnet und zueinander ausgerichtet angeordnet sind. Mit einem solchen taktilen Orientierungs- und Koordinatensystem ist es Blinden möglich, zwischen jeweils zwei Haptikstreifen befindliche Oberflächen- oder Substratbereiche zeilenmäßig abzutasten und Unregelmäßigkeiten durch Identifizierung deren Lage in der jeweiligen Zeile wiederauffindbar zu benennen. Unter "taktil" wird hierbei insbesondere "taktil wahrnehmbar" oder "taktil erfassbar" verstanden, so dass damit zum Ausdruck kommt, dass ein für Blinde ertastbares System zur Verfügung gestellt wird.

Zur Bereitstellung des taktilen, insbesondere taktil wahrnehmbaren, Orientierungs- und Koordinatensystems zur Ermöglichung der zeilenmäßigen Abtastung der Brüste eines weiblichen menschlichen Körpers, werden die fünf Klebe- und Haptikstreifen jeweils mit Abstand zueinander und senkrecht sowie parallel zueinander angeordnet und derart auf die Brüste eines weiblichen menschlichen Körpers umfassende Hautbereiche aufgeklebt, dass deren gleichartige einzelne Felder jeweils auf der zumindest im Wesentlichen waagerecht verlaufenden Linie gleicher Höhe liegend einander koordiniert zeilenmäßig zugeordnet und zueinander ausgerichtet angeordnet sind.
Hierbei ist die Verwendung der fünf Haptikstreifen zur Ausbildung des die Brüste eines menschlichen weiblichen Körpers erfassenden zeilenförmigen taktilen, insbesondere taktil wahrnehmbaren, Hilfsmittels zur Ausbildung und Abgrenzung eines Orientierungs- und Koordinatensystems durch Aufkleben der Haptikstreifen mit Abstand zueinander auf die Brüste umfassende Hautbereiche derart vorgesehen, dass jeder Zeile Felder gleicher Haptik zugeordnet und insbesondere von blinden Menschen zeilenmäßig zugeordnet taktil wahrnehmbar und die Brüste orientiert zeilenmäßig abtastbar sind.

Hierdurch ist die Verwendung des taktilen, insbesondere taktil wahrnehmbaren, Orientierungs- und Koordinatensystems als Hilfsmittel für Blinde zur zeilengenauen Abtastung der weiblichen Brüste am menschlichen Körper und Dokumentation der Position ertasteter Befunde möglich.

Durch die Erfindung wird es möglich, klinische Brustuntersuchungen von Blinden durchführen zu lassen. Mithilfe von Haptikstreifen und des daraus gebildeten taktilen, insbesondere taktil wahrnehmbaren, Orientierungs-und Koordinatensystems lassen sich die gesamten, die weiblichen Brüste aufweisenden Körperbereiche in das taktile Orientierungs- und Koordinatensystem einfassen, so dass beim Abtasten der Brust durch Palpation keine nicht erfassten, "weiße Flecken auf der Landkarte" ausbildenden Bereiche entstehen. Durch die Ausbildung des Orientierungs- und Koordinatensystems kann die klinische Brustuntersuchung durch Palpation von einer blinden Person autark und unabhängig ohne Hilfe von Hilfskräften durchgeführt werden. Auch ist es mithilfe des Orientierungs- und Koordinatensystems möglich, die Lage von ertasteten Befunden in dem Hautflächenbereich wiederauffindbar und identifizierbar zu benennen. Insbesondere ist es durch die entsprechende Anordnung der Haptikstreifen möglich, eine zeilenweise abzutastende, d.h. zu durchmusternde Strecke auszubilden, die nicht zu lang ist, so dass Blinde in der, im Zwischenraum zwischen zwei Haptikstreifen jeweils "imaginären", Zeile nicht verrutschen oder unorientiert vorgehen. Hierbei bietet das taktile Orientierungs- und Koordinatensystem aufgrund der erfindungsgemäßen Verwendung der Haptikstreifen die Möglichkeit, dass die Blinden jederzeit überprüfen können, dass sie sich noch in derselben Zeile befinden. Insbesondere ist es möglich, mindestens zwei parallel zueinander angeordnete Haptikstreifen mithilfe von zwei Fingern, beispielsweise dem Daumen und dem kleinen Finger, einer Hand gleichzeitig zu ertasten und somit die relative Lage der jeweils abgetasteten "imaginären" Zeile zu prüfen und zu verifizieren. Natürlich ist es ebenso möglich, die Lage mit jeweils einem Finger einer Hand zu verifizieren. Außerdem lässt sich mithilfe der erfindungsgemäßen Verwendung von Haptikstreifen und deren Anordnung in einem taktilen Orientierungssystem gleichzeitig ein Koordinatensystem erstellen, das eine klare Zuordnung eines Befundes zu einer Position in dem durchmusterten Gewebebereich ermöglicht. Schließlich ist durch die Ausbildung des Orientierungssystems mithilfe der Haptikstreifen die zu ertastende Oberfläche in keiner Weise beeinträchtigt.

Die Erfindung ist nachstehend anhand einer Zeichnung beispielhaft näher erläutert. Diese zeigt in
- Fig. 1: schematisch in Draufsicht einen Haptikstreifen mit vergrößerter Darstellung eines sich wiederholenden Musters,
- Fig. 2: in schematischer Darstellung die Ausbildung eines taktilen Orientierungs- und Koordinatensystems auf einem schematisch dargestellten Hautbereich eines weiblichen menschlichen Körpers, der die Brüste umund erfasst und in
- Fig. 3: in schematischer Darstellung den zeilenartigen Verlauf der Untersuchungsgänge.

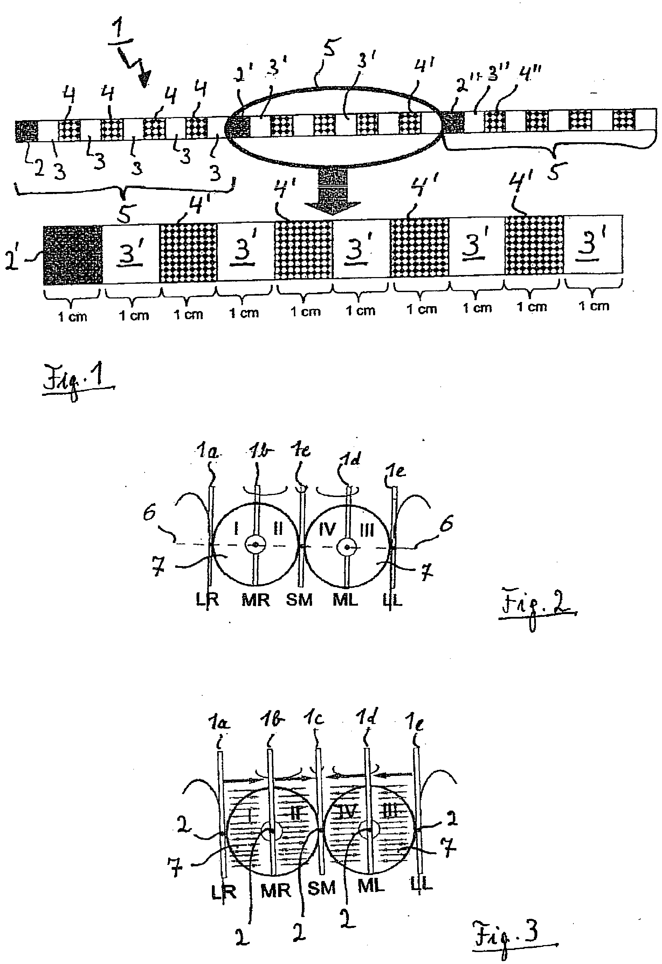

Zur Ausbildung eines taktilen, insbesondere taktil wahrnehmbaren Orientierungs- und Koordinatensystems werden mehrere der in Figur 1 dargestellten Klebe- und Haptikstreifen 1 verwendet. Ein solcher Klebe- und Haptikstreifen 1 besteht aus einem Muster mehrerer Felder 2, 3 und 4; 2', 3', 4' und 2", 3", 4", wobei im oberen Teilbild der Figur 1 jeweils drei sich wiederholende gleichmäßige Muster 5 abgebildet sind, die sich jeweils aus den Feldern 2, 3, 4 und 2', 3', 4' sowie 2", 3" 4" zusammensetzen. Die Felder 2, 2', 2" und 3, 3', 3" sowie 4, 4', 4" weisen jeweils eine unterschiedliche und auch unterschiedlich taktil wahrnehmbare haptische Oberfläche oder Oberflächenstruktur auf, die von einer blinden Person als unterschiedlich identifizierbar und ertastbar ist, wobei gleiche Bezugsziffern gleiche Struktur- oder Feldtypen bezeichnen. In diesem Ausführungsbeispiel bilden die Felder 2, 2', 2" einen ersten Feldtyp 2, die Felder 3, 3', 3" einen zweiten Feldtyp 3 und die Felder 4, 4', 4" einen dritten Feldtyp 4 aus. Beispielsweise ist die Oberfläche des Feldtyps 2 glatt, die des Feldtyps 3 strukturiert und die des Feldtyps 4 samtartig ausgebildet. Eine Konfektionierung dieses Haptikstreifens 1 besteht beispielsweise darin, dass dieser als 1 cm breiter und insgesamt ca. 65 cm langer Klebestreifen auf einer Rolle konfektioniert ist. Bei diesem Klebestreifen befindet sich auf der den Feldern 2, 2', 2", 3, 3', 3" und 4, 4', 4" gegenüber liegenden, rückseitigen Oberflächenseite des Klebe- oder Haptikstreifens 1 eine Beschichtung aus hautverträglichem, insbesondere hautfreundlichem, Klebstoff. Durch Ablängen, d.h. Abschneiden von dem Klebestreifen 1, werden die jeweiligen Haptikstreifen 1a, 1b, 1c, 1d, 1e gebildet. Die einzelnen Felder 2, 2', 2", 3, 3', 3" und 4, 4', 4" bilden jeweils 1 cm lange taktil wahrnehmbare Prägemarkierungen mit einer unterschiedlichen Textur bzw. Oberflächenbeschaffenheit aus. Beispielsweise besitzen die Felder 3, 3', 3" jeweils eine glatte Oberfläche und die Felder 4, 4', 4" jeweils eine rau strukturierte Oberfläche und die Felder 2, 2', 2" jeweils eine samtene Oberfläche. Dadurch, dass jedes zehnte Feld als Feldtyp 2 ausgebildet ist und sich zwischen diesen Feldern neun Felder befinden, die abwechselnd als Feldtyp 3 oder Feldtyp 4 ausgebildet sind, ergibt sich ein insgesamt metrisches System, welches es erlaubt, Nulllinien oder Nullpunkte in einem Orientierungs- und Koordinatensystem zu definieren.
Zur Ausbildung eines taktilen Orientierungs- und Koordinatensystems zur klinischen Brustuntersuchung durch Blinde werden von dem Klebestreifen 1 fünf Haptikstreifen 1a, 1b, 1c, 1d, 1e in einer solchen Länge abgetrennt, dass sie länger als der Durchmesser der zu untersuchenden weiblichen Brüste 7 sind und werden diese Streifen dann auf den zu untersuchenden Hautbereich aufgeklebt. Die Haptikstreifen 1a, 1b, 1c, 1d und 1e werden längs verlaufend parallel zur Mittelachse der Probandin oder Patientin aufgeklebt. Dabei wird jeweils ein erster und zweiter Haptikstreifen 1b, 1d direkt über die Brustmitte gelegt und geklebt, wobei ein Feld 2 unmittelbar und direkt auf dem Zentrum der Mamille angeordnet wird. Ein dritter Haptikstreifen 1c wird zwischen den beiden Brüsten 7 längs verlaufend auf der Sternummitte angeordnet, wobei ein Feld 2 dieses Haptikstreifens 1c auf derselben Höhe wie jeweils ein Feld 2 der Haptikstreifen 1b und 1d angeordnet wird, so dass die Verbindung dieser drei Felder 2 eine zumindest im Wesentlichen waagerechte Linie 6 ergibt. Ein vierter Haptikstreifen 1a und ein fünfter Haptikstreifen 1e werden dann jeweils längs verlaufend in Höhe der mittleren Axillarfalte aufgeklebt, wobei ebenfalls wiederum ein Feld 2 des jeweiligen Haptikstreifens 1a, 1e auf Höhe der waagerechten Linie 6 positioniert wird. Damit sind alle fünf Haptikstreifen 1a bis 1e parallel zueinander angeordnet und weisen eine waagerechte Linie 6 als Null-Linie auf, die die Längsachse der Probandin oder Patientin auf Mamillenhöhe rechtwinklig zu den Haptikstreifen 1a bis 1e kreuzt. Dadurch sind nun die Felder 2, 3, 4; 2', 3', 4'; 2", 3", 4" von viertem Haptikstreifen 1a bis fünftem Haptikstreifen 1e jeweils parallel zur Linie 6 ausgerichtete und übereinander liegende Zeilen ausbildend einander zugeordnet, so dass durch dieses System der fünf Haptikstreifen 1a, 1b, 1c, 1d, 1e ein Orientierungssystem geschaffen ist. Gleichzeitig ist dadurch aber auch ein Koordinatensystem geschaffen, welches durch entsprechende Bezeichnung Positionen innerhalb des abgegrenzten Hautbereiches wiederauffindbar benennbar macht. Die Haptikstreifen werden beispielsweise von der rechten zur linken Körperseite mit
lateral rechts (LR) für den vierten Haptikstreifen 1a, Mamille rechts (MR) für den ersten Haptikstreifen 1b, Sternummitte (SM) für den dritten Haptikstreifen 1c, Mamille links (ML) für den zweiten Haptikstreifen 1d und lateral links (LL) für den fünften Haptikstreifen 1e
bezeichnet. Zwischen den einzelnen Haptikstreifen entstehen nun einzelne Zonen, wobei beispielsweise die Zone zwischen den Haptikstreifen 1a und 1b mit I, die Zone zwischen den Haptikstreifen 1b und 1c mit II, die Zone zwischen den Haptikstreifen 1c und 1d mit IV und die Zone zwischen den Haptikstreifen 1d und 1e mit III bezeichnet wird. Die hierdurch mit I, II, III, IV bezeichneten, durchzumusternden Gewebezonen bzw. Hautbereiche besitzen eine Breite von ca. 8-14 cm. Die Zonen I und II sind der rechten Brust, die Zonen III und IV der linken Brust zugeordnet, wobei die Zone I von LR und MR, die Zone II von MR und SM, die Zone III von ML und LL sowie die Zone IV von SM und ML begrenzt wird. Alle Zonen werden nach kranial von der Clavicula und nach kaudal von der Bardenheuerschen Linie begrenzt. Bei der durchzuführenden Brustuntersuchung werden die einzelnen Zonen mäanderförmig, d.h. zeilenmäßig beginnend von links nach rechts, dann eine Zeile tiefer von rechts nach links und dann wieder eine Zeile tiefer von links nach rechts usw., abgetastet. Durch die Benennung der Zonen, deren Orientierung und die durch jeweils einen unterschiedlichen Feldtyp 2, 3, 4 voneinander abgegrenzten Zeilen, lässt sich somit ein Koordinatensystem benennen. Bei diesem Koordinatensystem bilden die Haptikstreifen 1a bis 1e die Y-Achse und bilden die Abstände zwischen jeweils zweien der einzelnen Haptikstreifen 1a bis 1e eine Unterteilung der X-Achse, die durch die jeweilige abzutastende Zeile definiert ist, wobei der Abstand zwischen jeweils zwei Haptikstreifen innerhalb einer Zone frei ab-oder eingeschätzt werden kann. Zur Dokumentation entsprechender Fundstellen wird die Zone I auf den Haptikstreifen LR, die Zone II auf den Haptikstreifen SM, die Zone III auf den Haptiksteifen LL und die Zone IV auf den Haptikstreifen SM, also jeweils die Haptikstreifen mit der geringeren Beweglichkeit bezogen. Für die Lokalisation des Tastbefundes reicht es dann aus, die jeweilige Zone anzugeben, die Abweichung von der Null-Linie nach oben als positive und nach unten als negative Zahl anzugeben, die der Anzahl der jeweiligen von der Null-Linie abzugreifenden Felder entspricht, und die Abweichung vom jeweiligen Bezugsstreifen auf der Tastzeile in die jeweilige Zone hinein anzugeben. Beispielsweise bedeutet "ZI, 3/5": Tastbefund in Zone I, drei Felder (bei 1 cm pro Feld auch gleich drei cm) nach kranial (oben) auf dem Haptikstreifen LR und dann auf dieser Zeile fünf (geschätzte) Felder in die Zone I hinein. Ein anderes Beispiel "ZIII, -4/7" würde die Lokalisierung eines Tastbefundes in der Zone III, vier Felder auf dem Haptikstreifen LL nach kaudal (unten) und dann auf dieser Zeile sieben Felder in die Zone III hinein, bedeuten. Die Untersuchungen der einzelnen Zonen I, II, III und IV erfolgen in der jeweiligen Zone mäanderartig Zeile für Zeile. Hierbei befindet sich die Probandin oder Patientin bei der Palpation oder Abtastung der Zone I in einer linksseitigen Halbseitenlage, damit der zu untersuchende laterale Anteil der rechten Brust, eben die Zone I, gestrafft ist. Die Tastuntersuchung bzw. Palpation beginnt oben am Unterrand der Clavicula und endet an dem Haptikstreifen MR. Die nächste, nach kaudal folgende Zeile wird in Umkehr der Untersuchungsrichtung durchgemustert bis am Ende der Zone I unten die Bardenheuersche Linie erreicht und abgetastet ist. Danach erfolgt die Durchmusterung bzw. Palpation der Zone II, bei welcher sich die Probandin oder Patientin in flacher Rückenlage befindet. Anschließend wird die Zone III durch Palpation untersucht, wobei sich die Probandin oder Patientin in halbrechter Seitenlage befindet. Abschließend erfolgt dann die Palpation der Zone IV wieder in flacher Rückenlage der Probandin oder Patientin. Das zeilenmäßige Abtasten der einzelnen Zonen ist in der Fig. 3 angedeutet.

Für die Ausbildung des Orientierungs- und Koordinatensystems können natürlich auch Haptikstreifen mit einer anderen Oberflächchenstruktur Verwendung finden. Beispielsweise können die Felder 3, 3', 3" jeweils eine glatte Oberfläche und die Felder 4, 4', 4" jeweils eine mit drei ertastbaren Punkten gekennzeichnete Oberfläche und die Felder 2, 2', 2" jeweils eine mit fünf ertastbaren Punkten versehene Oberfläche aufweisen. Auch hier ergibt sich dann dadurch, dass jedes zehnte Feld als Feldtyp 2 ausgebildet ist und sich zwischen diesen Feldern neun Felder befinden, die abwechselnd als Feldtyp 3 oder Feldtyp 4 ausgebildet sind, ein insgesamt metrisches System, welches es erlaubt, Nulllinien oder Nullpunkte in einem Orientierungs- und Koordinatensystem zu definieren.

## Patentansprüche

1. Verwendung mehrerer Klebe- und Haptikstreifen (1a, 1b, 1c, 1d, 1e) zur Ausbildung eines Hilfsmittels für Blinde zur Ermöglichung der zeilenmäßigen Abtastung von die Brüste (7) eines weiblichen menschlichen Körpers umfassenden Hautbereichen bei Durchführung einer klinischen Brustuntersuchung, wobei fünf Klebe- und Haptikstreifen (1a, 1b, 1c, 1d, 1e),
die jeweils eine Oberfläche aufweisen, die aus einer Reihe aneinandergereihter Felder (2, 3, 4; 2', 3', 4'; 2", 3", 4") besteht, wobei die Felder (2, 3, 4; 2', 3', 4'; 2" , 3", 4") ein mehrfach wiederkehrendes, gleichmäßiges Muster (5) ausbildend angeordnet sind, das sich aus mindestens drei taktil unterschiedlich wahrnehmbaren Feldtypen (2, 3, 4) zusammensetzt, wobei jeweils aneinander angrenzende Felder (2, 3, 4; 2', 3', 4'; 2", 3", 4") eine mit den Fingern taktil wahrnehmbare, unterschiedliche Oberflächenhaptik oder Oberflächenstruktur aufweisen und wobei die den Feldern (2, 3, 4; 2', 3', 4'; 2", 3", 4") gegenüberliegende, rückseitige Oberflächenseite der Klebe-und Haptikstreifen (1, 1a, 1b, 1c, 1d, 1e) mit einem hautverträglichen Klebstoff versehen ist,
jeweils mit Abstand zueinander und senkrecht sowie parallel zueinander auf die Brüste (7) eines weiblichen menschlichen Körpers umfassende Hautbereiche und jeweils mit einer solchen Länge, dass sie jeweils länger als der Durchmesser der zu untersuchenden weiblichen Brüste (7) sind, aufgeklebt werden,
wobei die fünf Klebe- und Haptikstreifen (1a, 1b, 1c, 1d, 1e) längs verlaufend zumindest im Wesentlichen parallel zur Längsachse des weiblichen Körpers auf diesem aufgebracht und taktil gleichartig wahrnehmbare Felder (2, 3, 4; 2', 3', 4'; 2", 3", 4") jeweils auf einer zumindest im Wesentlichen waagerecht verlaufenden Linie gleicher Höhe liegend einander koordiniert zeilenmäßig zugeordnet und zueinander ausgerichtet angeordnet und aufgeklebt werden,
wobei ein erster Klebe- und Haptikstreifen (1b) die Mamille der rechten Brust (7) überstreicht und ein zweiter Klebe-und Haptikstreifen (1d) die Mamille der linken Brust (7) überstreicht, wobei der erste und der zweite Haptik- und Klebestreifen (1b, 1d) jeweils direkt über die jeweilige Brustmitte gelegt und geklebt werden,
wobei ein dritter Klebe- und Haptikstreifen (1c) zwischen den beiden Brüsten (7) längs der Sternummitte verlaufend angeordnet wird,
ein vierter Klebe- und Haptikstreifen (1a) lateral rechts in Höhe der mittleren Axillarfalte und
ein fünfter Klebe- und Haptikstreifen (1e) lateral links in Höhe der mittleren Axillarfalte angeordnet wird, und
wobei jeweils ein Feld (2) eines ersten Feldtyps (2) von erstem und zweitem Klebe- und Haptikstreifen (1b, 1d) auf zumindest im Wesentlichen gleicher Höhe auf dem Zentrum der jeweiligen Mamille angeordnet wird und jeweils ein Feld (2) des ersten Feldtyps (2) von drittem bis fünftem Klebe- und Haptikstreifen (1c, 1a, 1e) zumindest im Wesentlichen auf derselben Höhe angeordnet wird.

2. Verwendung nach Anspruch 1, wobei fünf Klebe- und Haptikstreifen (1a, 1b, 1c, 1d, 1e) verwendet werden, bei welchen das mehrfach wiederkehrende gleichmäßige Muster (5) aus einem ersten Feld (2; 2'; 2") des ersten Feldtyps (2), gefolgt von mehreren Feldern (3, 4; 3', 4'; 3, 4") aus abwechselnd aneinander gereihten Feldern eines zweiten und dritten Feldtyps (3, 4) besteht.

3. Verwendung nach Anspruch 1 oder 2, wobei fünf Klebe- und Haptikstreifen (1a, 1b, 1c, 1d, 1e) verwendet werden, bei welchen das mehrfach wiederkehrende gleichmäßige Muster (5) aus einer Folge von einem ersten Feld des ersten Feldtyps (2) und abwechselnd aneinander gereihten neun Feldern des zweiten und dritten Feldtyps (3, 4) besteht.

4. Verwendung nach einem der vorhergehenden Ansprüche, wobei fünf Klebe- und Haptikstreifen (1a, 1b, 1c, 1d, 1e) verwendet werden, bei welchen das mehrfach wiederkehrende gleichmäßige Muster ein metrisches System ausbildet und jedes Feld (2, 3, 4; 2', 3', 4' ; 2" , 3", 4") eine Länge von 1 cm aufweist.

5. Verwendung nach einem der vorhergehenden Ansprüche, wobei fünf Klebe- und Haptikstreifen (1a, 1b, 1c, 1d, 1e) verwendet werden, bei welchen die den Feldern (2, 3, 4; 2', 3', 4'; 2", 3", 4") gegenüberliegende, rückseitige Oberflächenseite des Klebe- und Haptikstreifens (1a, 1b, 1c, 1d, 1e) mit einem hautfreundlichen Klebstoff versehen ist.

6. Verwendung nach einem der vorhergehenden Ansprüche, wobei fünf Klebe- und Haptikstreifen (1a, 1b, 1c, 1d, 1e) verwendet werden, die von einem als Rolle konfektionierten Klebe- und Haptikstreifen (1) abgelängt werden.

## Claims

1. Use of several adhesive and haptic strips (1a, 1b, 1c, 1d, 1e) for forming an aid for blind persons to enable the line-by-line palpation of skin areas including the breasts (7) of a female human body when performing a clinical breast examination, wherein five adhesive and haptic strips (1a, 1b, 1c, 1d, 1e),
each having a surface consisting of a series of lined-up fields (2, 3, 4; 2', 3', 4'; 2", 3", 4"), wherein the fields (2, 3, 4; 2', 3', 4'; 2'', 3", 4") are arranged to form a repeatedly recurring, uniform pattern (5) composed of at least three field types differently perceptible by touch (2, 3, 4), wherein fields (2, 3, 4; 2', 3', 4'; 2", 3", 4") respectively adjoining each other have a different surface haptics or surface structure that can be perceived by touch with the fingers, and wherein the rear surface side of the adhesive and haptic strips (1, 1a, 1b, 1c, 1d, 1e) opposite the fields (2, 3, 4; 2', 3', 4'; 2", 3", 4") is provided with a skin-friendly adhesive,
are adhered respectively at a distance from one another and perpendicular as well as parallel to each other to skin areas including the breasts (7) of a female human body and respectively having such a length that they are respectively longer than the diameter of the female breasts (7) to be examined,
wherein the five adhesive and haptic strips (1a, 1b, 1c, 1d, 1e) are applied to the female body, running longitudinally at least substantially parallel to the longitudinal axis of the latter, and fields (2, 3, 4; 2', 3', 4'; 2", 3", 4") which can be perceived by touch in the same way, each lying on an at least substantially horizontal line of equal height, are arranged and adhered to be assigned to one another in a coordinated line-by-line manner and aligned with one another,
wherein a first adhesive and haptic strip (1b) sweeps over the mammilla of the right breast (7) and a second adhesive and haptic strip (1d) sweeps over the mammilla of the left breast (7), the first and second haptic and adhesive strips (1b, 1d) each being placed and adhered directly over the respective breast center,
wherein a third adhesive and haptic strip (1c) is arranged to extend between the two breasts (7) lengthwise of the sternum center,
a fourth adhesive and haptic strip (1a) is arranged laterally on the right at the height of the central axillary fold and
a fifth adhesive and haptic strip (1e) is arranged laterally on the left at the height of the central axillary fold, and
wherein a respective field (2) of a first field type (2) of first and second adhesive and haptic strips (1b, 1d) is arranged at at least substantially the same height on the center of the respective mammilla and a respective field (2) of the first field type (2) of third to fifth adhesive and haptic strips (1c, 1a, 1e) is arranged at at least substantially the same height.

2. Use according to claim 1, wherein five adhesive and haptic strips (1a, 1b, 1c, 1d, 1e) are used, in which the repeatedly recurring uniform pattern (5) consists of a first field (2; 2'; 2") of the first field type (2), followed by several fields (3, 4; 3', 4'; 3", 4") of fields of a second and third field types (3, 4), alternately lined up.

3. Use according to claim 1 or 2, wherein five adhesive and haptic strips (1a, 1b, 1c, 1d, 1e) are used, in which the repeatedly recurring uniform pattern (5) consists of a sequence of a first field of the first field type (2) and nine fields of the second and third field types (3, 4) alternately lined up.

4. Use according to any one of the preceding claims, wherein five adhesive and haptic strips (1a, 1b, 1c, 1d, 1e) are used, in which the repeatedly recurring uniform pattern forms a metric system and each field (2, 3, 4; 2', 3', 4'; 2", 3", 4") has a length of 1 cm.

5. Use according to any one of the preceding claims, wherein five adhesive and haptic strips (1a, 1b, 1c, 1d, 1e) are used, in which the rear surface side of the adhesive and haptic strip (1a, 1b, 1c, 1d, 1e) opposite the fields (2, 3, 4; 2', 3', 4'; 2'', 3", 4") is provided with a skin-friendly adhesive.

6. Use according to any one of the preceding claims, wherein five adhesive and haptic strips (1a, 1b, 1c, 1d, 1e) are used which are cut to length from an adhesive and haptic strip (1) made up as a roll.

## Revendications

1. Utilisation de plusieurs bandes adhésives et haptiques (1a, 1b, 1c, 1d, 1e) pour former une aide pour les personnes aveugles afin de permettre la palpation ligne par ligne de zones de peau comportant les seins (7) d'un corps humain féminin lors de la réalisation d'un examen clinique des seins, dans laquelle cinq bandes adhésives et haptiques (1a, 1b, 1c, 1d, 1e),
ayant chacune une surface constituée d'une série de champs alignés (2, 3, 4 ; 2', 3', 4' ; 2", 3", 4"), où les champs (2, 3, 4 ; 2', 3', 4' ; 2", 3", 4") sont disposés de manière à former un motif uniforme (5) récurrent plusieurs fois, composé d'au moins trois types de champs (2, 3, 4) tactilement perceptibles de manière différente, où des champs (2, 3, 4 ; 2', 3', 4') ; 2", 3", 4") adjacents les uns aux autres présentent une haptique de surface ou une structure de surface différente, tactilement perceptible avec les doigts, et où la face arrière des bandes adhésives et haptiques (1, 1a, 1b, 1c, 1d, 1e) opposée aux champs (2, 3, 4 ; 2', 3', 4' ; 2", 3", 4") est pourvue d'un adhésif à tolérance cutanée,
sont collées respectivement à distance les unes des autres et perpendiculairement ainsi que parallèlement les unes aux autres sur des zones de peau comportant les seins (7) d'un corps humain féminin et ayant respectivement une longueur telle qu'elles sont respectivement plus longues que le diamètre des seins féminins (7) à examiner,
dans laquelle les cinq bandes adhésives et haptiques (1a, 1b, 1c, 1d, 1e) sont appliquées sur le corps féminin, s'étendant longitudinalement au moins essentiellement parallèlement à l'axe longitudinal de ce dernier, et des champs (2, 3, 4 ; 2', 3', 4' ; 2", 3", 4") tactilement perceptibles de la même manière, se trouvant chacun sur une ligne au moins sensiblement horizontale de même hauteur, sont disposés et collés pour être associés les uns aux autres de manière coordonnée ligne par ligne et alignés les uns par rapport aux autres,
dans laquelle une première bande adhésive et haptique (1b) balaie le mamelon du sein droit (7) et une deuxième bande adhésive et haptique (1d) balaie le mamelon du sein gauche (7), les première et deuxième bandes haptiques et adhésives (1b, 1d) étant chacune placée et collée directement sur le centre du sein respectif,
dans laquelle une troisième bande adhésive et haptique (1c) est disposée de manière à s'étendre entre les deux seins (7) dans le sens de la longueur du centre du sternum,
une quatrième bande adhésive et haptique (1a) est disposée latéralement à droite, à la hauteur du pli axillaire central et
une cinquième bande adhésive et haptique (1e) est disposée latéralement à gauche à la hauteur du pli axillaire central, et
dans laquelle un champ respectif (2) d'un premier type de champ (2) de première et deuxième bandes adhésives et haptiques (1b, 1d) est disposé au moins essentiellement à la même hauteur sur le centre du mamelon respectif et un champ respectif (2) du premier type de champ (2) des troisième à cinquième bandes adhésives et haptiques (1c, 1a, 1e) est disposé au moins essentiellement à la même hauteur.

2. Utilisation selon la revendication 1, dans laquelle cinq bandes adhésives et haptiques (1a, 1b, 1c, 1d, 1e) sont utilisées, dans lesquelles le motif uniforme (5) récurrent plusieurs fois est constitué d'un premier champ (2 ; 2' ; 2") du premier type de champ (2), suivi de plusieurs champs (3, 4 ; 3', 4' ; 3", 4") de champs d'un deuxième et d'un troisième type de champ (3, 4) alternativement alignés.

3. Utilisation selon la revendication 1 ou 2, dans laquelle cinq bandes adhésives et haptiques (1a, 1b, 1c, 1d, 1e) sont utilisées, dans lesquelles le motif uniforme (5) récurrent plusieurs fois est constitué d'une séquence d'un premier champ du premier type de champ (2) et de neuf champs du deuxième et du troisième type de champ (3, 4) alternativement alignés.

4. Utilisation selon l'une quelconque des revendications précédentes, dans laquelle cinq bandes adhésives et haptiques (1a, 1b, 1c, 1d, 1e) sont utilisées, dans lesquelles le motif uniforme récurrent plusieurs fois forme un système métrique et chaque champ (2, 3, 4 ; 2', 3', 4' ; 2", 3", 4") a une longueur de 1 cm.

5. Utilisation selon l'une quelconque des revendications précédentes, dans laquelle cinq bandes adhésives et haptiques (1a, 1b, 1c, 1d, 1e) sont utilisées, dans lesquelles la face arrière de la bande adhésive et haptique (1a, 1b, 1c, 1d, 1e) opposée aux champs (2, 3, 4 ; 2', 3', 4' ; 2", 3", 4") est pourvue d'un adhésif bien toléré par la peau.

6. Utilisation selon l'une quelconque des revendications précédentes, dans laquelle on utilise cinq bandes adhésives et haptiques (1a, 1b, 1c, 1d, 1e) qui sont coupées à longueur à partir d'une bande adhésive et haptique (1) constituée en rouleau.
